(19) **Europäisches Patentamt European Patent Office Office européen des brevets**

(11) **EP 4 495 735 A1**

(12) **EUROPEAN PATENT APPLICATION**

(43) Date of publication:
22.01.2025 Bulletin 2025/04

(21) Application number: 24182782.3

(22) Date of filing: 18.06.2024

(51) International Patent Classification (IPC):
*G06F 1/20* (2006.01) *G06F 1/3206* (2019.01)
*G06F 1/3296* (2019.01)

(52) Cooperative Patent Classification (CPC):
G06F 1/206; G06F 1/3206; G06F 1/3296

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.07.2023 CN 202310895206

(71) Applicants:
• InnoLux Corporation
Jhunan Town
Miao li 35053 (TW)

• Carux Technology Pte. Ltd.
Singapore 339510 (SG)

(72) Inventors:
• CHANG, Yi-Cheng
74147 Tainan (TW)
• CHEN, Chung-Le
35053 Jhunan Town, Miaoli County (TW)
• SUNG, Li-Wei
74147 Tainan (TW)

(74) Representative: Becker, Eberhard
Becker Kurig & Partner
Patentanwälte mbB
Bavariastraße 7
80336 München (DE)

(54) **ELECTRONIC DEVICE AND DRIVING METHOD FOR ELECTRONIC DEVICE**

(57) An electronic device (100, 200) and a driving method (S100) for an electronic device (100, 200) are provided. The electronic device includes a sensor (110, 210), a controller (120, 220), a driving circuit (130, 230), and at least one electronic unit (EU1, EU2). The sensor (110, 210) senses an ambient temperature (AT1, AT2) to provide ambient temperature information (IAT1, IAT2). The controller (120, 220) receives the ambient temperature information (IAT1, IAT2). The driving circuit (130, 230) drives the at least one electronic unit (EU1, EU2) according to a driving signal (SDR1, SDR2). The driving circuit (130, 230) generates different driving signals (SDR1, SDR2) according to different ambient temperature information (IAT1, IAT2).

FIG. 1

# EP 4 495 735 A1

**Description**

BACKGROUND

Technical Field

The disclosure relates to an electronic device and a driving method for an electronic device. Specifically, the disclosure relates to an electronic device and a driving method capable of providing different driving signals according to ambient temperature.

Description of Related Art

An electronic device may drive at least one electronic unit using a driving circuit. Specifically, the driving circuit may control the operation of the at least one electronic unit using a driving signal. For example, the electronic unit may include, for example, at least one of any form of light-emitting diode (LED), capacitor, resistor, or transistor. However, when the ambient temperature is changed, the characteristics of the driving circuit and the at least one electronic unit are changed based on the ambient temperature, so that the at least one electronic unit may not be operated stably or maintain the same operating performance. Therefore, how to make the driving circuit and the electronic unit operate stably or maintain the same operating performance under the change of the ambient temperature is one of the research focuses of those skilled in the art.

SUMMARY

The disclosure relates to an electronic device and a driving method capable of providing different driving signals according to ambient temperature.

An electronic device of the disclosure includes a sensor, a controller, a driving circuit, and at least one electronic unit. The sensor senses an ambient temperature to provide ambient temperature information. The controller is electrically connected to the sensor. The controller receives the ambient temperature information. The driving circuit is electrically connected to the controller. The at least one electronic unit is electrically connected to the driving circuit. The driving circuit generates different driving signals according to different ambient temperature information to drive the at least one electronic unit.

A driving method of the disclosure is for an electronic device. The electronic device includes a sensor, a controller, a driving circuit, and at least one electronic unit. The driving method further includes: sensing an ambient temperature by the sensor to provide ambient temperature information; receiving the ambient temperature information by the controller; and generating different driving signals according to different ambient temperature information by the driving circuit to drive the at least one electronic unit.

Based on the above, the driving circuit drives the electronic unit according to the driving signal. The driving signal corresponds to the ambient temperature information. In this way, the driving circuit and the electronic units are operated stably or maintain the same operating performance under the change of the ambient temperature.

BRIEF DESCRIPTION OF THE DRAWINGS

FIG. 1 is a schematic diagram of an electronic device shown according to the first embodiment of the disclosure.
FIG. 2 is a flowchart of a driving method shown according to an embodiment of the disclosure.
FIG. 3 is a flowchart of a driving method shown according to an embodiment of the disclosure.
FIG. 4 is a schematic diagram of an electronic device shown according to the second embodiment of the disclosure.
FIG. 5 is a flowchart of a driving method shown according to an embodiment of the disclosure.
FIG. 6 is a schematic diagram of data shown according to an embodiment of the disclosure.
FIG. 7 is a schematic diagram of generating data shown according to an embodiment of the disclosure.

DESCRIPTION OF THE EMBODIMENTS

The disclosure may be understood by referring to the following detailed description taken in conjunction with the accompanying drawings as described below. It should be noted that, for purposes of clarity and easy understanding by readers, each drawing of the disclosure depicts a portion of an electronic device, and some elements in each drawing may not be drawn to scale. In addition, the number and size of each device depicted in the drawings are illustrative and not intended to limit the scope of the disclosure.

Certain terms are used throughout the description and the following claims to refer to specific elements. As will be understood by those skilled in the art, manufacturers of electronic equipment may refer to elements by different names. This document does not intend to distinguish between elements that differ in name but not function. In the following description and in the claims, the terms "containing", "including", and "having" are used in an open-ended manner, and should therefore be construed to mean "containing but not limited to..." Accordingly, when the terms "containing", "including", and/or "having" are used in the description of the disclosure, it will be indicated that there are corresponding features, regions, steps, operations, and/or elements, but not limited to there being one or a plurality of corresponding features, regions, steps, operations, and/or components.

It should be understood that, when an element is referred to as being "coupled to", "connected to", or "conducted to" another element, the element may be directly connected to another element and an electrical connection may be established directly, or there may be an intermediate element between these elements for relaying an electrical connection (indirect electrical connection). In contrast, when an element is referred to as being "directly coupled to," "directly conducted to", or "directly connected to" another element, there are no intervening members present.

Although terms such as first, second, third, etc. may be used to describe various constituent elements, such constituent elements are not limited by these terms. The terms are used to distinguish a constituent element from other constituent elements in the specification. The claims may not use the same terms, but may use the terms first, second, third etc. with respect to the desired order of the elements. Therefore, in the following description, a first constituent element may be a second constituent element in the claims.

An electronic device of the disclosure may include a display device, an antenna device, a sensing device, a light-emitting device, a touch display, a curved display, or a free shape display, but not limited thereto. The electronic device may include a bendable or flexible electronic device. The electronic device may, for example, include an electronic unit. The electronic unit may include a passive element and an active element, such as a capacitor, a resistor, an inductor, a diode, a transistor, and the like. The diode may include a light-emitting diode or a photodiode. The light-emitting diode may include, for example, an organic LED (OLED), a mini LED, a micro LED, or a quantum dot LED (may include QLED or QDLED), or other suitable materials, or a combination of the above, but is not limited thereto. The display device may include, for example, a tiling display device, but is not limited thereto. The antenna device may be, for example, a liquid-crystal antenna, but is not limited thereto. The antenna device may include, for example, an antenna tiling device, but is not limited thereto. It should be noted that the electronic device may be any arrangement and combination of the above, but the disclosure is not limited thereto. In addition, the shape of the electronic device may be rectangular, circular, polygonal, a shape having curved edges, or other suitable shapes. The electronic device may have a peripheral system such as a driving system, a control system, a light source system, etc. to support a display device, an antenna device, or a tiling device, but the disclosure is not limited thereto. The electronic device may be applied to a dashboard or a central control panel of a vehicle, but not limited thereto. The sensing device may include a camera, an infrared sensor, or a fingerprint sensor, etc., but the disclosure is not limited thereto. In some embodiments, the sensing device may further include a flashlight, an infrared (IR) light source, other sensors, electronic units, or a combination thereof, but is not limited thereto.

In the disclosure, the embodiments use "pixel" or "pixel unit" as a unit for describing a specific area including at least one functional circuit for at least one specific function. The area of a "pixel" depends on the unit used to provide a particular function, adjacent pixels may share the same portions or conductive lines, but may also contain specific portions of themselves. For example, adjacent pixels may share the same scan line or the same data line, but a pixel may also have its own transistor or capacitor.

It should be noted that technical features in different embodiments described below may be replaced, reorganized, or mixed with each other to form another embodiment without departing from the spirit of the disclosure.

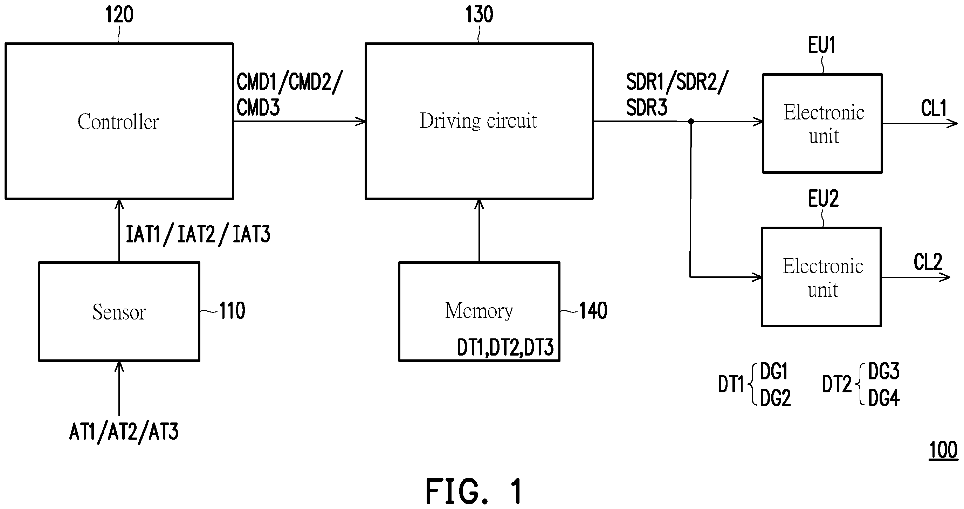

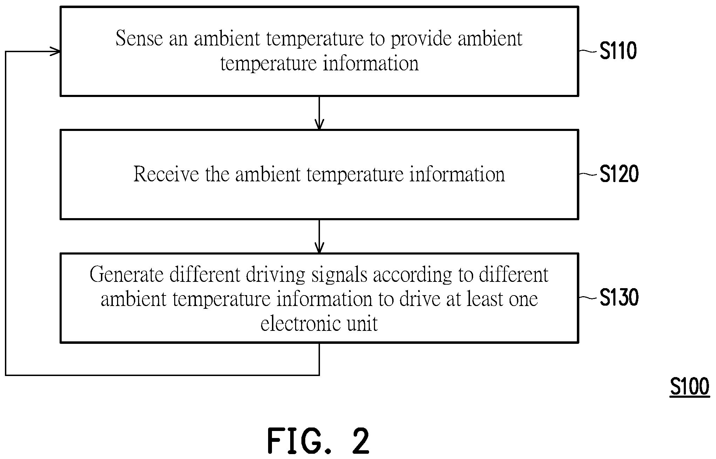

Please refer to FIG. 1 and FIG. 2 at the same time. FIG. 1 is a schematic diagram of an electronic device shown according to the first embodiment of the disclosure. FIG. 2 is a flowchart of a driving method shown according to an embodiment of the disclosure. In the present embodiment, an electronic device 100 includes a sensor 110, a controller 120, a driving circuit 130, and electronic units EU1 and EU2. A driving method S100 is applicable to the electronic device 100. The driving method S100 includes steps S110 to S130. In step S110, the sensor 110 senses an ambient temperature to generate ambient temperature information. For example, the sensor 110 senses a first ambient temperature AT1 to generate first ambient temperature information IAT1. The sensor 110 senses a second ambient temperature AT2 to generate second ambient temperature information IAT2.

In the present embodiment, the controller 120 is electrically connected to the sensor 110. The controller 120 receives the ambient temperature information (such as one of the first ambient temperature information IAT1 and the second ambient temperature information IAT2) provided by the sensor 110 in step S120. The driving circuit 130 is electrically connected to the controller 120. The driving circuit 130 generates different driving signals according to different ambient temperature information in step S130. The driving circuit 130 drives the electronic units EU1 and EU2 according to the driving signals in step S130. For example, the driving signals are signals generated according to the data corresponding to a memory 140. The data includes gamma data. The driving circuit 130 drives the electronic units EU1 and EU2 using different driving signals according to different ambient temperature information. For example, when the ambient temperature is substantially equal to the first ambient temperature AT1, the driving circuit 130 generates a first driving signal SDR1 according to the first ambient temperature information IAT1. The first driving signal SDR1 corresponds to the first ambient temperature AT1. The driving circuit 130 drives the electronic units EU1 and EU2 using the first driving signal SDR1.

As another example, when the ambient temperature is substantially equal to the second ambient temperature AT2, the driving circuit 130 generates a second driving signal SDR2 according to the second ambient temperature information IAT2. The second driving signal SDR2 corresponds to the second ambient temperature AT2. The driving circuit 130 drives the electronic units EU1 and EU2 using the second driving signal SDR2.

The driving signals SDR1 and SDR2 respectively include at least one driving voltage signal, at least one driving current signal, or at least one pulse-width modulation (PWM) signal, but not limited thereto.

The electronic units EU1 and EU2 have a first operating state (e.g., display brightness at the first ambient temperature AT1) based on the first driving signal SDR1 at the first ambient temperature AT1. The electronic units EU1 and EU2 have a second operating state (e.g., display brightness at the second ambient temperature AT2) based on the second driving signal SDR2 at the second ambient temperature AT2. Based on the calibrated driving method of the present embodiment, the electronic units EU1 and EU2 have the same operating state under the change of the ambient temperature.

In the present embodiment, the electronic units EU1 and EU2 are, for example, voltage-driven elements, but the disclosure is not limited thereto. The electronic units EU1 and EU2 may provide corresponding operations based on the voltage value of the first driving signal SDR1 at the first ambient temperature AT1. The electronic units EU1 and EU2 may provide corresponding operations based on the voltage value of the second driving signal SDR2 at the second ambient temperature AT2.

It is worth mentioning here that the driving circuit 130 drives the electronic units EU1 and EU2 according to driving signals corresponding to different ambient temperatures. In this way, the driving circuit 130 and the electronic units EU1 and EU2 are operated stably or maintain the same operating performance under the change of the ambient temperature. For example, the situation that the electronic device activates the over-current protection device and the electronic device is abnormal due to the increase of the current caused by the increase of the ambient temperature may be avoided. Moreover, when the electronic device is, for example, a display device, and the electronic units EU1 and EU2 are, for example, light-emitting elements, the electronic units EU1 and EU2 may maintain the same luminous brightness when the same screen is displayed and the ambient temperature becomes higher, a dark state screen may be maintained in the dark state when the ambient temperature becomes high, and a brighter screen due to the temperature rise is not produced, thus providing viewers with a good viewing experience.

In the present embodiment, the driving circuit 130 generates a driving signal according to the driving command corresponding to the ambient temperature information in step S130, but the disclosure is not limited to the present embodiment. In the present embodiment, the electronic device 100 further includes the memory 140. The memory 140 stores data of different driving signals corresponding to different ambient temperature information. Taking the present embodiment as an example, the memory 140 is connected to the driving circuit 130. The controller 120 provides a corresponding driving command according to the received ambient temperature information. The driving circuit 130 selects data corresponding to the driving command from the memory 140 according to the received driving command, and generates a driving signal according to the data.

For example, the controller 120 provides a driving command CMD1 according to the first ambient temperature information IAT1. The driving circuit 130 selects first data DT1 corresponding to the driving command CMD1 from the memory 140 according to the driving command CMD1, and generates the driving signal SDR1 according to the first data DT1.

As another example, the controller 120 provides a driving command CMD2 according to the second ambient temperature information IAT2. The driving circuit 130 selects second data DT2 corresponding to the driving command CMD1 from the memory 140 according to the driving command CMD2, and generates the driving signal SDR2 according to the second data DT2.

After step S130, the electronic device 100 may return to the operation of step S110.

The present embodiment exemplifies the electronic units EU1 and EU2. However, the disclosure is not limited to the present embodiment, and there may be one or a plurality of electronic units in the disclosure.

In the present embodiment, the electronic units EU1 and EU2 may respectively include at least one of a diode, a capacitor, a resistor, a transistor, or a pixel unit in any form, for example. The diode may include an LED or a photodiode. The LED may include, for example, an organic LED (OLED), a mini LED, a micro LED, or a quantum dot LED (may include QLED or QDLED), or other suitable materials, or a combination of the above, but is not limited thereto.

In the present embodiment, the electronic units EU1 and EU2 may be disposed outside or inside the electronic device 100. The combination of the electronic device 100 and the electronic units EU1 and EU2 may be a light source device, a backlight module, a display, or a modulation device.

In the present embodiment, the sensor 110 may be disposed outside the electronic device 100 to sense the external environment temperature of the electronic device 100. The sensor 110 may be disposed inside the electronic device 100 to sense the internal environment temperature of the electronic device 100.

In the present embodiment, the electronic unit EU1 may provide an output light CL1 (but the disclosure is not limited thereto). The electronic unit EU2 may provide an output light CL2 (but the disclosure is not limited thereto). Taking the present embodiment as an example, the color of the output light CL1 is different from the color of the output light CL2, for example. The first data DT1 includes gamma data DG1 and DG2. The gamma data DG1 and DG2 respectively have data of different gamma curves. The gamma data DG1 corresponds to the electronic unit EU1. The gamma data DG2 corresponds to the electronic unit EU2. Furthermore, the second data DT2 includes gamma data DG3 and DG4. The gamma data DG3 and DG4 respectively have data of different gamma curves. The gamma data DG3 corresponds to the electronic unit EU1. The gamma data DG4 corresponds to the electronic unit EU2. For example, when the ambient temperature is substantially equal to the first ambient temperature AT1, the driving circuit 130 generates the first driving signal SDR1 according to the gamma data DG1 and the gamma data DG2 to drive the electronic unit EU1 and the electronic unit EU2 respectively. When the ambient temperature is substantially equal to the second ambient temperature AT2, the driving circuit 130 generates the second driving signal SDR2 according to the gamma data DG3 and the gamma data DG4 to drive the electronic unit EU1 and the electronic unit EU2 respectively. In some embodiments, the color of the output light CL1 of the electronic unit EU1 is the same as the color of the output light CL2 of the electronic unit EU2 (for example, both are blue, white, or other suitable colors). Therefore, the driving circuit 130 may generate the same driving signal to drive the electronic units EU1 and EU2 according to the same gamma data.

In the present embodiment, the sensor 110 may include a thermistor. The thermistor has either a negative temperature coefficient (NTC) or a positive temperature coefficient (PTC). The sensor 110 may provide the ambient temperature information according to the resistance value of the thermistor, such as one of the first ambient temperature information IAT1 and the second ambient temperature information IAT2.

In the present embodiment, the controller 120 is, for example, a microcontroller unit (MCU), a central processing unit (CPU), or other programmable general-purpose or special-purpose microprocessors, digital signal processors (DSPs), programmable controllers, application-specific integrated circuits (ASICs), programmable logic devices (PLDs), or other similar devices, or a combination of the devices.

In the present embodiment, the memory 140 may be any type of fixed or movable random-access memory (RAM), read-only memory (ROM), flash memory, a similar device, or a combination of the devices.

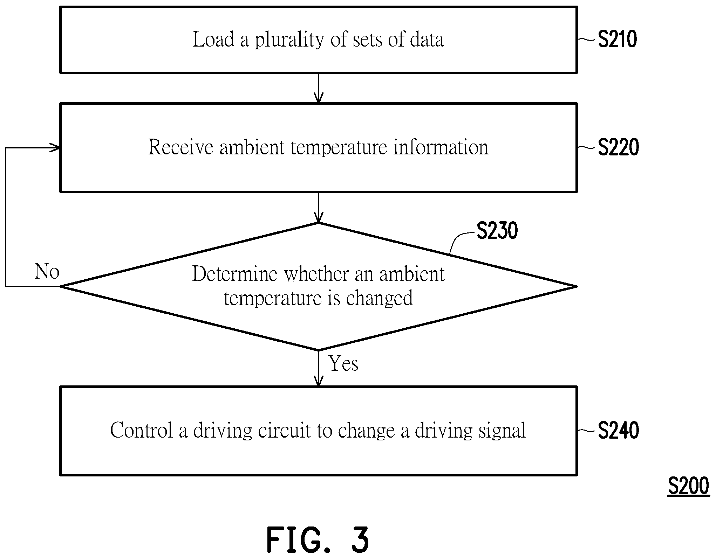

Please refer to FIG. 1 and FIG. 3 at the same time. FIG. 3 is a flowchart of a driving method shown according to an embodiment of the disclosure. In the present embodiment, a driving method S200 is applicable to the controller 120 of the electronic device 100. The driving method S200 includes steps S210 to S240. In step S210, the controller 120 loads a plurality of sets of data into the memory 140. Taking the present embodiment as an example, the controller 120 loads at least the first data DT1 and the second data DT2 into the memory 140. In step S220, the controller 120 receives ambient temperature information. In step S230, the controller 120 determines whether an ambient temperature is changed. When the ambient temperature is changed, the controller 120 controls the driving circuit 130 to change a driving signal in step S240. Moreover, when the ambient temperature is not changed, the controller 120 returns to the operation in step S220.

Taking the present embodiment as an example, during the first period, the controller 120 receives the first ambient temperature information IAT1. During the second period after the first period, the controller 120 receives the second ambient temperature information IAT2. In step S230, the controller 120 determines that the ambient temperature is changed from the first ambient temperature AT1 to the second ambient temperature AT2 according to the change of the ambient temperature information. In step S240, the controller 120 changes the driving command CMD1 into the driving command CMD2. Therefore, the driving circuit 130 changes the first driving signal SDR1 into the second driving signal SDR2 according to the driving command CMD2. The driving circuit 230 drives the electronic units EU1 and EU2 using the second driving signal SDR2.

Moreover, during the second period, the controller 120 receives the first ambient temperature information IAT1. The controller 120 determines in step S230 that the ambient temperature is maintained at the first ambient temperature AT1. Therefore, the controller 120 does not change the driving command CMD1. The driving circuit 130 drives the electronic units EU1 and EU2 using the first driving signal SDR1.

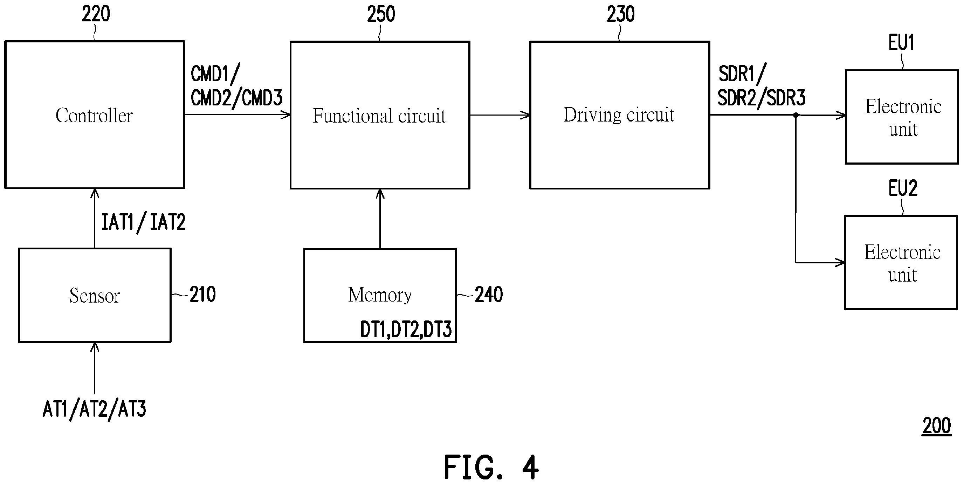

Please refer to FIG. 4. FIG. 4 is a schematic diagram of an electronic device shown according to the second embodiment of the disclosure. In the present embodiment, an electronic device 200 includes a sensor 210, a controller 220, a driving circuit 230, a memory 240, and a functional circuit 250. The sensor 210 senses the first ambient temperature AT1 to generate the first ambient temperature information IAT1. The sensor 210 senses the second ambient temperature AT2 to generate the second ambient temperature information IAT2. The controller 220 is electrically connected to the sensor 210. The controller 220 receives one of the first ambient temperature information IAT1 and the second ambient temperature information IAT2. The functional circuit 250 is electrically connected to the controller 220 and the driving circuit 230. Furthermore, the functional circuit 250 is electrically connected to the controller 220, the driving circuit 230, and the memory 240.

The controller 220 provides a driving command according to the received ambient temperature information. The functional circuit 250 selects at least one set of data from the memory 240 according to the received driving command. The data selected by the functional circuit 250 corresponds to the driving command provided by the controller 220. The driving circuit 230 generates a driving signal according to the data selected by the functional circuit 250.

For example, the controller 220 provides the driving command CMD1 according to the first ambient temperature information IAT1. The functional circuit 250 selects the first data DT 1 from the memory 240 according to the driving command CMD1. The functional circuit 250 provides the first data DT1 to the driving circuit 230. The driving circuit 230 generates the driving signal SDR1 according to the first data DT1.

As another example, the controller 220 provides the driving command CMD2 according to the second ambient temperature information IAT2. The functional circuit 250 selects the second data DT2 from the memory 240 according to the driving command CMD2. The functional circuit 250 provides the second data DT2 to the driving circuit 230. The driving circuit 230 generates the driving signal SDR2 according to the second data DT2.

In the present embodiment, the functional circuit 250 may be implemented by an application-specific integrated circuit (ASIC), but the disclosure is not limited thereto.

In the present embodiment, the driving method 5100 is also applicable to the electronic device 200.

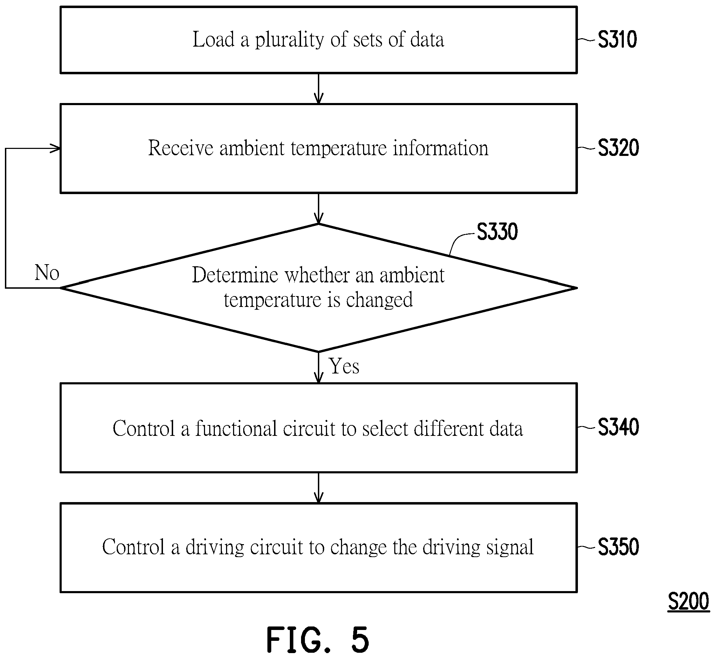

Please refer to FIG. 4 and FIG. 5. FIG. 5 is a flowchart of a driving method shown according to an embodiment of the disclosure. In the present embodiment, a driving method S300 is applicable to the electronic device 200. The driving method S300 includes steps S310 to S350. In step S310, the controller 220 loads a plurality of sets of data into the memory 240. Taking the present embodiment as an example, the controller 220 loads at least the first data DT1 and the second data DT2 into the memory 240. In step S320, the controller 220 receives ambient temperature information. In step S330, the controller 220 determines whether the ambient temperature is changed. When the ambient temperature is changed, the controller 220 controls the functional circuit 250 to select different data in step S340. Therefore, the driving circuit 230 changes the driving signal according to different data in step S350.

Moreover, in step S330, when the ambient temperature is not changed, the controller 220 returns to the operation in step S320.

Taking the present embodiment as an example, during the first period, the controller 220 receives the first ambient temperature information IAT1. During the second period after the first period, the controller 220 receives the second ambient temperature information IAT2. In step S330, the controller 220 determines that the ambient temperature is changed from the first ambient temperature AT1 to the second ambient temperature AT2 according to the change of the ambient temperature information. In step S340, the controller 220 changes the driving command CMD1 into the driving command CMD2. The functional circuit 250 selects the second data DT2 from the memory 240. Therefore, the driving circuit 230 changes the first driving signal SDR1 into the second driving signal SDR2 according to the second data DT2 in step S350. The driving circuit 230 drives the electronic units EU1 and EU2 using the second driving signal SDR2.

Moreover, during the second period, the controller 220 receives the first ambient temperature information IAT1. The controller 220 determines in step S330 that the ambient temperature is maintained at the first ambient temperature AT1. The controller 220 does not change the driving command CMD1. Therefore, the driving circuit 230 drives the electronic units EU1 and EU2 using the first driving signal SDR1.

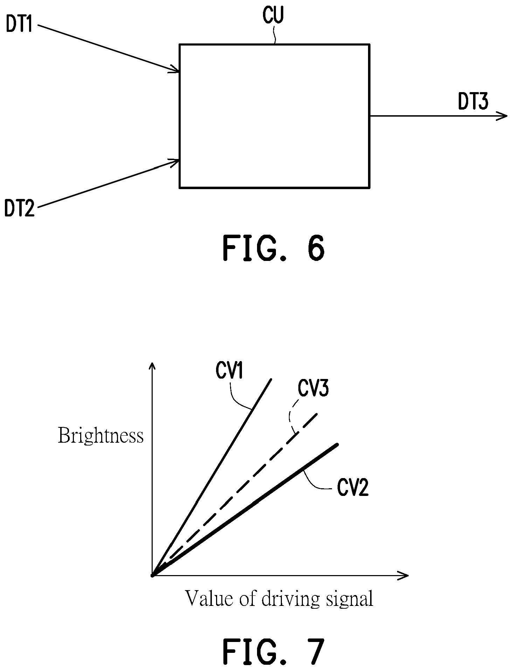

Please refer to FIG. 1, FIG. 4, FIG. 6, and FIG. 7 at the same time. FIG. 6 is a schematic diagram of data shown according to an embodiment of the disclosure. FIG. 7 is a schematic diagram of generating data shown according to an embodiment of the disclosure. In the present embodiment, the electronic unit EU1 is, for example, a light-emitting element. New data other than the first data DT1 and the second data DT2 may be generated. The first driving signal SDR1 is generated based on the first data DT1. The first driving signal SDR1 corresponds to the first data DT1. The second driving signal SDR2 is generated based on the second data DT2. The second driving signal SDR2 corresponds to the second data DT2. The first data DT1 and the second data DT2 respectively include gamma data (e.g., the gamma data DG1 to DG4). The first ambient temperature AT1 corresponds to the first ambient temperature information IAT1. The first ambient temperature information IAT1 corresponds to the first data DT1. The second ambient temperature AT2 corresponds to the second ambient temperature information IAT2. The second ambient temperature information IAT2 corresponds to the second data DT2.

The brightness performance generated by the electronic unit EU1 based on the first driving signal SDR1 is shown in a characteristic curve CV1. The characteristic curve CV1 corresponds to the first ambient temperature AT1. The characteristic curve CV1 has a larger brightness increase amount. The brightness performance generated by the electronic unit EU1 based on the second driving signal SDR2 is shown in a characteristic curve CV2. The characteristic curve CV2 corresponds to the second ambient temperature AT2. The characteristic curve CV2 has a smaller brightness increase amount. Under different ambient temperatures, the brightness of the electronic unit EU1 is positively correlated with both the value of the first driving signal SDR1 and the value of the second driving signal SDR2. The value may be a voltage value, a current value, or a duty cycle, but not limited thereto. For example, the first ambient temperature AT1 is lower than the second ambient temperature AT2. Generally, the brightness generated by the electronic unit EU1 at the first ambient temperature AT1 is lower than the brightness generated at the second ambient temperature AT2. Therefore, when the electronic unit EU1 is at the first ambient temperature AT1, the electronic unit EU1 corrects the issue of low brightness based on the first driving signal SDR1. When the electronic unit EU1 is at the second ambient temperature AT2, the electronic unit EU1 corrects the issue of high brightness based on the second driving signal SDR2. Therefore, the operating performance of the electronic unit EU1 may be maintained under different ambient temperatures.

In some embodiments, different electronic units EU1 have different operating states due to different designs or characteristics. For example, the first ambient temperature AT1 is lower than the second ambient temperature AT2. The operating state of the electronic unit EU1 at the first ambient temperature AT1 is better than the operating state thereof at the second ambient temperature AT2. Therefore, the characteristic curve CV1 has a smaller increase in operating state. The characteristic curve CV2 has a larger increase in operating state. Therefore, the electronic unit EU1 may have the same operating state and maintain the same operating performance under different ambient temperatures via calibration and driving.

In the present embodiment, a third ambient temperature AT3 is between the first ambient temperature AT1 and the second ambient temperature AT2. Therefore, the electronic device 100 performs an interpolation operation on the first data DT1, the second data DT2, and the third ambient temperature AT3 to generate third data DT3. The third data DT3 corresponds to the third ambient temperature AT3. Further, the electronic device 100 adds the third data DT3 using an arithmetic unit CU. For example, the arithmetic unit CU may add the third data DT3 according to Equation (1).

$$DT3 = DT2 + (DT1 - DT2) \times \left( \frac{AT3 - AT2}{AT1 - AT2} \right) \ldots \text{Equation (1)}$$

In Equation (1), the arithmetic unit CU subtracts the value of the second ambient temperature AT2 from the value of the first ambient temperature AT1 to generate a first difference (i.e., "AT1-AT2"). The arithmetic unit CU subtracts the value of the second ambient temperature AT2 from the value of the third ambient temperature AT3 to generate a second difference (i.e., "AT3-AT2"). The arithmetic unit CU divides the second difference by the first difference to generate a proportional value. The arithmetic unit CU subtracts the second data DT2 from the first data DT1 to generate a data difference (i.e., "DT1-DT2"), and multiplies the data difference by the proportional value to generate a product value. Next, the arithmetic unit CU adds the product value to the second data DT2 to generate the third data DT3.

In some embodiments, the controller 120 receives third ambient temperature information IAT3 corresponding to the third ambient temperature AT3. Therefore, the electronic device 100 may perform an interpolation operation on the first data DT1, the second data DT2, and the third ambient temperature information IAT3 to generate the third data DT3. The third data DT3 corresponds to the third ambient temperature information IAT3.

In the present embodiment, the third data DT3 does not need to be stored in the memory 140. The third data DT3 may be transmitted to the driving circuit 130. The driving circuit 130 generates a driving signal SDR3 according to the third data DT3.

In some embodiments, the third data DT3 is loaded into the memory 140. Next, the controller 120 may provide a corresponding driving command according to the third ambient temperature information IAT3. The driving circuit 130 selects the third data DT3 from the memory 140 according to the driving command, and generates the corresponding third driving signal SDR3 according to the third data DT3. Therefore, the brightness performance generated by the electronic unit EU1 based on the third driving signal is shown in a characteristic curve CV3. The brightness change of the characteristic curve CV3 is larger than the brightness change of the characteristic curve CV2 and smaller than the brightness change of the characteristic curve CV1.

In some embodiments, the fourth data newly added by the interpolation operation is loaded into the memory 140 and covers the original third data DT3.

In the present embodiment, the arithmetic unit CU may be disposed in the controller 120 or the driving circuit 130. The arithmetic unit CU may also be disposed outside the controller 120 and the driving circuit 130.

It should be understood that the method for generating the third data DT3 in the present embodiment is applicable to the electronic device 200. In the electronic device 200, the arithmetic unit CU may be disposed in the controller 220, the driving circuit 230, or the functional circuit 250. The arithmetic unit CU may also be disposed outside the controller 220, the driving circuit 230, and the functional circuit 250.

Based on the above, the driving circuit of the electronic device drives the electronic units according to the driving signals corresponding to different ambient temperatures. In this way, the driving circuit and the electronic units are operated stably or maintain the same operating performance under the change of the ambient temperature. In addition, the driving circuit generates corresponding driving signals according to the data. The electronic device may generate new driving signals with different data and new driving signals corresponding to the new data.

Lastly, it should be mentioned that: each of the above embodiments is used to describe the technical solutions of the disclosure and is not intended to limit the disclosure; and although the disclosure is described in detail via each of the above embodiments, those having ordinary skill in the art should understand that: modifications may still be made to the technical solutions recited in each of the above embodiments, or portions or all of the technical features thereof may be replaced to achieve the same or similar results; the modifications or replacements do not make the nature of corresponding technical solutions depart from the scope of the technical solutions of each of the embodiments of the disclosure.

**Claims**

1. An electronic device (100, 200), comprising:

   a sensor (110, 210) configured to sense ambient temperature (AT1, AT2) to provide ambient temperature information (IAT1, IAT2);
   a controller (120, 220) electrically connected to the sensor (110, 210) and configured to receive the ambient temperature information (IAT1, IAT2);
   a driving circuit (130, 230) electrically connected to the controller (120, 220); and
   at least one electronic unit (EU1, EU2) electrically connected to the driving circuit (130, 230),
   wherein the driving circuit (130, 230) generates different driving signals (SDR1, SDR2) according to different ambient temperature information (IAT1, IAT2) to drive the at least one electronic unit (EU1, EU2).

2. The electronic device (100, 200) of claim 1, further comprising:
   a memory (140, 240) configured to store a plurality of sets of data (DT1, DT2) corresponding to different ambient temperature information (IAT1, IAT2).

3. The electronic device (100) of claim 2, wherein:

   the memory (140) is electrically connected to the driving circuit (130),
   the controller (120) provides a driving command (CMD1, CMD2) according to the received ambient temperature information (IAT1, IAT2), and
   the driving circuit (130) selects at least one set of data (DT1, DT2) from the memory (140) according to the driving command (CMD1, CMD2), and generates the driving signals (SDR1, SDR2) according to the at least one set of data (DT1, DT2).

4. The electronic device (200) of claim 2, further comprising:

   a functional circuit (250) electrically connected to the controller (220) and the driving circuit (230),
   wherein the controller (220) provides a driving command (CMD1, CMD2) according to the received ambient temperature information (IAT1, IAT2),
   wherein the functional circuit (250) selects at least one set of data (DT1, DT2) from the memory (240) according to the received driving command (CMD1, CMD2), and
   wherein the driving circuit (230) generates the driving signals (SDR1, SDR2) according to the at least one set of data (DT1, DT2).

5. The electronic device of claim 4, wherein the memory (240) is electrically connected to the functional circuit (250).

6. The electronic device (200) of claim 4, wherein:

   a first ambient temperature (AT1) corresponds to a first driving command (CMD1),
   a second ambient temperature (AT2) corresponds to a second driving command (CMD2), and
   when the ambient temperature is changed from the first ambient temperature (AT1) to the second ambient temperature (AT2), the controller (220) changes the first driving command (CMD1) to the second driving command (CMD2).

7. The electronic device (200) of claim 6, wherein:

   the functional circuit (250) selects first data (DT1) from the memory (240) according to the first driving command (CMD1), and
   the functional circuit (250) selects second data (DT2) from the memory (240) according to the second driving command (CMD2).

8. The electronic device (200) of claim 6, wherein:

the sensor (110, 210) receives a third ambient temperature (AT3),
the third ambient temperature (AT3) is between the first ambient temperature (AT1) and the second ambient temperature (AT2), and
the electronic device (200) further comprises:
an arithmetic unit (CU) configured to perform an interpolation operation on the first data (DT1), the second data (DT2), the first ambient temperature (AT1), the second ambient temperature (AT2), and the third ambient temperature (AT3) to generate third data (DT3) corresponding to a third ambient temperature (AT3).

9. The electronic device of claim 8, wherein the arithmetic unit (CU) is disposed in one of the controller (220) and the driving circuit (230).

10. The electronic device of claim 8, wherein the third data is transferred to the driving circuit without being transferred to the memory.

11. A driving method (S100) for an electronic device (100, 200), wherein the electronic device comprises (100, 200) a sensor (110, 210), a controller (120, 220), a driving circuit (130, 230), and at least one electronic unit (EU1, EU2), wherein the driving method (S100) comprises:

sensing an ambient temperature (AT1, AT2) by the sensor (110, 210) to provide ambient temperature information (IAT1, IAT2); (S110)
receiving the ambient temperature information (IAT1, IAT2) by the controller (120, 220); (S120) and
generating different driving signals (SDR1, SDR2) according to different ambient temperature information (IAT1, IAT2) by the driving circuit to drive the at least one electronic unit (EU1, EU2). (S130)

12. The driving method of claim 1, further comprising:
controlling the driving circuit (130, 230) to change the driving signal (SDR1, SDR2) when the ambient temperature information (IAT1, IAT2) is changed.

13. The driving method of claim 11, wherein the electronic device (100, 200) further comprises a memory (140, 240), wherein the driving method (S100) further comprises:
loading a plurality of sets of data (DT1, DT2) into the memory (140, 240) by the controller (120, 220).

14. The driving method of claim 13, wherein the driving signal (SDR1, SDR2) is generated respectively according to one of the plurality of sets of data (DT1, DT2), the ambient temperature (AT1, AT2) comprises a first ambient temperature (AT1) and a second ambient temperature (AT2), the first ambient temperature (AT1) corresponds to first data (DT1) in the plurality of sets of data (DT1, DT2), and the second ambient temperature (AT2) corresponds to second data (DT2) in the plurality of sets of data (DT1, DT2), wherein the driving method (S110) further comprises:

receiving a third ambient temperature (AT3) by the sensor (110, 210), wherein the third ambient temperature (AT3) is between the first ambient temperature (AT1) and the second ambient temperature (AT2); and
performing an interpolation operation on the first data (DT1), the second data (DT2), the first ambient temperature (AT1), the second ambient temperature (AT2), and the third ambient temperature (AT3) to generate third data (DT3) corresponding to a third ambient temperature (AT3).

15. The driving method of claim 14, wherein the third data (DT3) is transferred to the driving circuit (130, 230) without being transferred to the memory (140, 240).

FIG. 1

EP 4 495 735 A1

```
┌────────────────────────────────────────────────┐
│  Sense an ambient temperature to provide ambient│ ─S110
│           temperature information               │
└────────────────────────────────────────────────┘
                        │
                        ▼
┌────────────────────────────────────────────────┐
│   Receive the ambient temperature information   │ ─S120
└────────────────────────────────────────────────┘
                        │
                        ▼
┌────────────────────────────────────────────────┐
│ Generate different driving signals according to │
│   different ambient temperature information to  │ ─S130
│          drive at least one electronic unit     │
└────────────────────────────────────────────────┘
```

S100

FIG. 2

```
┌─────────────────────────────────────────────┐
│        Load a plurality of sets of data      │───S210
└─────────────────────────────────────────────┘
                      │
                      ▼
┌─────────────────────────────────────────────┐
│      Receive ambient temperature information │───S220
└─────────────────────────────────────────────┘
                      │
                      ▼
              S230
         ◇─────────────◇
   No   ╱  Determine whether an ambient ╲
 ◄──────   temperature is changed        
         ╲                              ╱
          ◇─────────────◇
                 │ Yes
                 ▼
┌─────────────────────────────────────────────┐
│  Control a driving circuit to change a driving signal │───S240
└─────────────────────────────────────────────┘
                                              S200
```

FIG. 3

EP 4 495 735 A1

FIG. 4

EP 4 495 735 A1

```
┌─────────────────────────────────────────────────┐
│           Load a plurality of sets of data        │──S310
└─────────────────────────────────────────────────┘
                        │
                        ▼
┌─────────────────────────────────────────────────┐
│         Receive ambient temperature information   │──S320
└─────────────────────────────────────────────────┘
                        │
                        ▼
                                          ╱S330
              ╱───────────────────────────╲
        No   ╱   Determine whether an ambient ╲
      ◄─────     temperature is changed        
              ╲───────────────────────────╱
                        │ Yes
                        ▼
┌─────────────────────────────────────────────────┐
│     Control a functional circuit to select        │──S340
│               different data                      │
└─────────────────────────────────────────────────┘
                        │
                        ▼
┌─────────────────────────────────────────────────┐
│   Control a driving circuit to change the driving │──S350
│                   signal                          │
└─────────────────────────────────────────────────┘

                                              S200
```

FIG. 5

DT1 →

CU

DT3 →

DT2 →

## FIG. 6

EP 4 495 735 A1

Brightness

CV1

CV3

CV2

Value of driving signal

## FIG. 7

**EUROPEAN SEARCH REPORT**

| | Application Number |
|---|---|
| | EP 24 18 2782 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/040163 A1 (SUN WEIN-TOWN [TW]) 12 February 2009 (2009-02-12) * the whole document * ----- | 1-15 | INV. G06F1/20 G06F1/3206 G06F1/3296 |
| X | US 2010/237697 A1 (DUNN WILLIAM [US] ET AL) 23 September 2010 (2010-09-23) * the whole document * ----- | 1-15 | |

| | |
|---|---|
| | TECHNICAL FIELDS SEARCHED (IPC) |
| | G06F |

The present search report has been drawn up for all claims

| Place of search | Date of completion of the search | Examiner |
|---|---|---|
| The Hague | 27 November 2024 | Vieira, Alexandre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 2782

This annex lists the patent family members relating to the patent documents cited in  the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | | Publication date |
|---|---|---|---|---|
| US 2009040163 A1 | 12-02-2009 | TW | 200907890 A | 16-02-2009 |
| | | TW | 200907987 A | 16-02-2009 |
| | | US | 2009040163 A1 | 12-02-2009 |
| | | US | 2009040167 A1 | 12-02-2009 |
| US 2010237697 A1 | 23-09-2010 | AU | 2010218083 A1 | 22-09-2011 |
| | | AU | 2016203550 A1 | 16-06-2016 |
| | | CA | 2754371 A1 | 02-09-2010 |
| | | CN | 102422342 A | 18-04-2012 |
| | | EP | 2401738 A2 | 04-01-2012 |
| | | ES | 2681722 T3 | 14-09-2018 |
| | | IL | 214816 A | 21-04-2016 |
| | | JP | 2012518816 A | 16-08-2012 |
| | | KR | 20110125249 A | 18-11-2011 |
| | | RU | 2011139152 A | 10-04-2013 |
| | | US | 2010237697 A1 | 23-09-2010 |
| | | WO | 2010099187 A2 | 02-09-2010 |

EPO FORM P0459

For more details about this annex : see Official Journal of the European Patent Office, No. 12/82